# EUROPÄISCHE PATENTSCHRIFT

(11) **EP 1 588 884 B1**
(45) Veröffentlichungstag und Bekanntmachung des Hinweises auf die Patenterteilung: **03.03.2010**
(21) Anmeldenummer: 05007259.4
(22) Anmeldetag: 04.04.2005
(51) Int. Cl.: B60J 7/16

(54) **Klappverdeck eines Fahrzeugs**
Collapsible top of a vehicle
Trappe pivotante pour véhicule

(30) Priorität: 15.04.2004 DE 102004018905
(43) Veröffentlichungstag der Anmeldung: 26.10.2005
(73) Patentinhaber: Webasto AG, 82131 Stockdorf (DE)
(72) Erfinder: Reihl, Peter, 82319 Starnberg (DE); Wagner, Adam, 82110 Germering (DE); Stolle, Georg, 81369 München (DE)
(74) Vertreter: Konnerth, Dieter Hans

(56) Entgegenhaltungen:
- DE-A1- 10 210 616
- DE-A1- 10 243 070

## Beschreibung

Die Erfindung betrifft ein Klappverdeck eines Fahrzeugs mit den Merkmalen des Oberbegriffs des Anspruchs 1.

Aus der DE 102 43 070 A1 ist ein gattungsgemäßes Klappverdeck bekannt geworden, das ein über eine Dachkinematik an einem Fahrzeugbauteil verstellbar gelagertes Dachteil aufweist. Die Dachkinematik weist ein 4-gliedriges Getriebe auf, dessen Antriebsbewegung unmittelbar auf einen der Lenker der Dachkinematik übertragen wird.

Das aus der DE 101 50 219 A1 bekannte ablegbare Fahrzeugdach enthält ein hinteres Dachteil, das über ein Viergelenk am mittleren Dachteil schwenkbar gelagert ist. Der Schwenkantrieb wirkt unmittelbar auf einen der Lenker des Viergelenks.

Aus der DE 102 10 616 A1 ist ein gattungsgemäßes Klappverdeck bekannt geworden, bei dem ein Dachteil über ein Viergelenk an einem Dachrahmen und dieser Dachrahmen wiederum über ein eine Hauptsäule und einen Hauptlenker enthaltendes Viergelenk an der Karosserie schwenkbar gelagert ist. Der Hauptlenker treibt über einen Koppelhebel einen am Dachrahmen schwenkbar gelagerten Kulissenhebel an, der bei geschlossenem Dach in einer Riegelstellung am Dachrahmen angeordnet ist. Der Hauptlenker führt als Teil eines Rastgetriebes die Riegelbewegung aus, während das Dachteil schon in seiner Schließstellung angeordnet ist.

Der Erfindung liegt die Aufgabe zugrunde, ein eingangs genanntes Klappverdeck zu schaffen, bei dem die Verstellmechanik für das verstellbar gelagerte Dachteil derart gebildet ist, so dass sie in verbesserter Gestaltung zum Ausführen einer Zusatzfunktion geeignet ist.

Die Aufgabe wird erfindungsgemäß durch ein Klappverdeck mit den Merkmalen des Anspruchs 1 gelöst.

Vorteilhafte Ausgestaltungen der Erfindung sind in den Unteransprüchen angegeben.

Die Verstellkinematik bzw. das Rastgetriebe enthält einen an einem Lagerteil schwenkbar gelagerten Schwenklenker, einen ersten Koppellenker zwischen einem am Lagerteil schwenkbar gelagerten Winkelhebel und dem Schwenklenker, und einen zweiten Koppellenker zwischen dem Winkelhebel und einem Anlenkfortsatz des einen Lenkers der das Dachteil lagernden Dachkinematik, und zweckmäßigerweise ist eine Antriebseinrichtung mit dem Schwenklenker verbunden.

Die Zusatzfunktion besteht insbesondere im Ent- bzw. Verriegeln des Dachteils. Damit kann das Dachteil ohne einen separaten Antrieb in seiner Schließstellung zunächst entriegelt werden, so dass es bei einer weiteren Antriebsbewegung der Verstellkinematik aus seiner Schließstellung bewegt und insbesondere angehoben werden kann. Selbstverständlich können auch andere beim Öffnen und Schließen des Klappdaches auszuführende Bewegungen wie z. B. das Bewegen von Klappen für ein Verdeckgestänge ausgeführt werden.

Vorzugsweise ist die Verstellkinematik bzw. das Rastgetriebe ein 6-gliedriges Getriebe und die Verstellkinematik bzw. das Rastgetriebe weist bevorzugt einen an einem Lagerteil schwenkbar gelagerten Schwenklenker auf, der ein Riegelorgan als Teil einer Riegeleinrichtung für das Dachteil enthält. Die Riegeleinrichtung kann in vielfältiger Art gebildet sein, z. B. mit einem Riegel in Eingriff an einem Bolzen oder mit Zapfen oder Schiebern im Eingriff in Öffnungen oder Nuten oder dergleichen.

Das Lagerteil der Verstellkinematik kann ein karosseriefestes Teil oder ein Teil des Klappverdecks oder seiner Lagerung sein, das zumindest zeitweise bewegbar sein kann.

In bevorzugter Gestaltung kann zumindest ein weiterer Betätigungsmechanismus für eine weitere Funktion an die Verstellmechanik gekoppelt sein, z. B. die Verriegelung des Daches an einem Windlauf.

Nachfolgend wird das Klappverdeck anhand eines Ausführungsbeispiels unter Bezugnahme auf die Zeichnung näher erläutert. Es zeigt:
- Fig. 1: in einer Seitenansicht in schematischer Teildarstellung ein geschlossenes Klappverdeck eines Fahrzeugs mit einem mittels einer Dachkinematik verstellbar gelagerten hinteren Dachteil und einer mit der Dachkinematik verbundenen Verstellkinematik;
- Fig. 2: in einer Ansicht gemäß Fig. 1 das hintere Dachteil nach einer ersten Betätigung der Verstellkinematik;
- Fig. 3: in einer Ansicht gemäß Fig. 1 das hintere Dachteil in einer angehobenen Zwischenstellung nach einer weiteren Betätigung der Verstellkinematik;
- Fig. 4: in einer Ansicht gemäß Fig. 1 das weiter nach vorne bewegte hintere Dachteil in einer weiteren Zwischenstellung; und
- Fig. 5: in einer Ansicht gemäß Fig. 1 das hintere Dachteil in einer vorderen Endstellung über dem vorderen Dachteil.

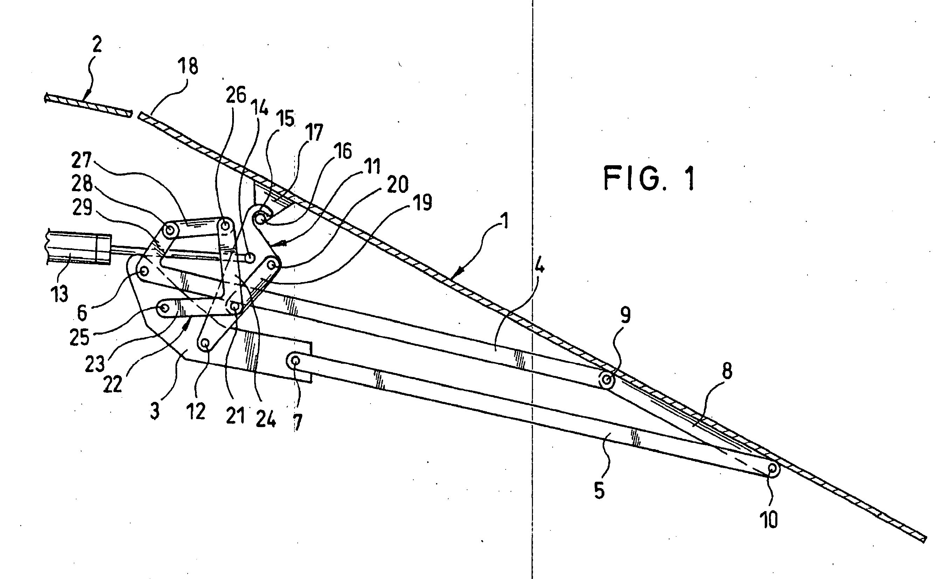

Ein Klappverdeck eines Fahrzeugs, beispielsweise ein Hardtop, das zwischen einer Schließstellung über dem Fahrzeuginnenraum und einer Offenstellung, in der es in einem heckseitigen Ablageraum oder Verdeckkasten abgelegt ist, verstellbar ist, enthält ein hinteres Dachteil 1 (siehe Fig. 1) und zumindest ein davor angeordnetes vorderes Dachteil 2, das beidseits jeweils mittels eines Hauptviergelenks an der Karosserie schwenkbar gelagert ist. Das Hauptviergelenk enthält ein oberes Lagerteil 3, das mit dem vorderen Dachteil 2 fest verbunden ist und an dem die beiden Lenker (nicht dargestellt) des Hauptviergelenks schwenkbar angelenkt sind. Ein derartiges Klappverdeck ist in der DE 101 50 219 A1 offenbart, auf die bezüglich des grundsätzlichen Aufbaus des Klappverdecks Bezug genommen wird.

Das hintere Dachteil 1 ist über eine Dachkinematik an dem Lagerteil 3 verstellbar gelagert. Die Dachkinematik enthält ein Viergelenk mit einem ersten Lenker 4 und einem zweiten Lenker 5, die einerseits am Lagerteil 3 in Gelenken 6 bzw. 7 schwenkbar gelagert sind und andererseits über einen Lenker 8 in Gelenken 9 bzw. 10 miteinander verbunden sind. Das hintere Dachteil 1 ist an dem Lenker 8 befestigt oder der Lenker 8 ist als Dachteilträger gebildet, der ein Teil des hinteren Dachteils 1 ist.

Eine Verstellkinematik zum Verstellen des hinteren Dachteils 1 enthält einen Schwenklenker 11, der am Lagerteil 3 in einem zwischen den Gelenken 6 und 7 angeordneten Gelenk 12 schwenkbar gelagert und mit einer Antriebseinrichtung 13 im Anlenkpunkt 14 verbunden ist, die z. B. als hydraulische Kolben-ZylinderEinheit gebildet ist und sich andererseits am Lagerteil 3, einer Verlängerung des Lagerteils oder an einem mit diesem fest verbundenen Trägerteil abstützt (nicht dargestellt).

Der Schwenklenker 11 enthält an dem seiner Schwenklagerung (Gelenk 12) gegenüberliegenden Ende ein Riegelwirkteil, insbesondere in Form eines Hakens 15 oder eines Zapfens, der mit einem Riegelhalteteil wie z. B. einem Bolzen 16 oder einer Halteöffnung, zusammenwirkt, der mit dem hinteren Dachteil 1 fest verbunden ist, beispielsweise mittels einer Haltelasche 17, die vorzugsweise seitlich an der Unterseite des hinteren Dachteils 1 und nahe dem Oberrand 18 des hinteren Dachteils 1 fest angebracht ist.

Die Verstellkinematik enthält des weiteren einen ersten Koppellenker 19, der einerseits mittels eines Gelenks 20 am Schwenklenker 11 angelenkt ist und andererseits mittels eines Gelenks 21 mit einem Winkelhebel 22 gekoppelt ist, der zwei unter etwa 90 Grad zueinander stehende Schenkel 23 und 24 aufweist, wobei das Gelenk 21 zentral an der Basis der beiden Schenkel 23 und 24 angeordnet ist. Der erste Schenkel 23 ist in einem Gelenk 25 an dem Lagerteil 3 angelenkt, während der zweite Schenkel 24 mittels eines Gelenks 26 mit einem zweiten Koppellenker 27 verbunden ist, der wiederum über ein Gelenk 28 mit einem Anlenkfortsatz 29 gekoppelt ist, der sich vom ersten Lenker 4 im Bereich seines lagerteilseitigen Gelenks 6 abgewinkelt und insbesondere nach oben (gemäß Fig. 1) erstreckt.

Die Verstellkinematik ist somit als 6-gliedriges Antriebsgetriebe mit dem Lagerteil 3, dem Schwenklenker 11, dem ersten Koppellenker 19, dem Winkelhebel 22, dem zweiten Koppellenker 27 und dem Anlenkfortsatz 29 gebildet. Im Gegensatz zu einem 4-gliedrigen Getriebe kann dieses 6-gliedrige Antriebsgetriebe, das ein Rastgetriebe darstellt, über den Anlenkfortsatz 29 im ersten Lenker 4 des das hintere Dachteil 1 lagernden Viergelenks eine Rast erzeugen, während der Schwenklenker 11 anfänglich bewegt wird, um beispielsweise eine Entriegelung des hinteren Dachteils 1 auszuführen.

In der Schließstellung des Daches (siehe Fig. 1) ist der erste Koppellenker 19 in einer solchen Stellung an dem in Riegelstellung angeordneten Schwenklenker 11 angeordnet, daß seine durch seine beiden Gelenke 20 und 21 verlaufende Längsachse im wesentlichen deckungsgleich mit der Verbindungsgeraden durch das Gelenk 12 des Schwenklenkers 11 und das obere Gelenk 20 des ersten Koppellenkers 19 ist oder sich in einer geringen Übertotpunktstellung befindet. Der Schwenklenker 11 hält über seinen Verriegelungshaken 15 das hintere Dachteil 1 in seiner Schließstellung am Fahrzeug bzw. Fahrzeugdach.

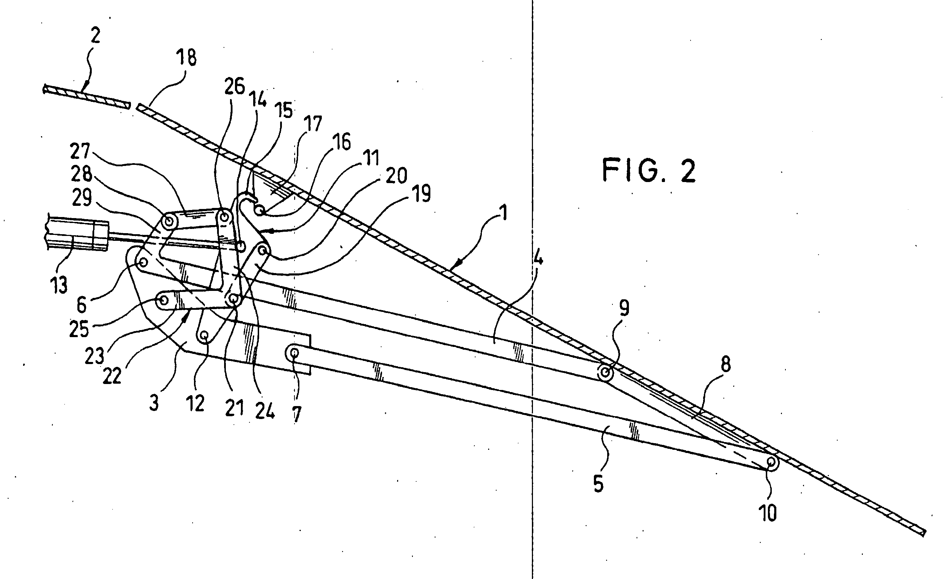

Wenn mittels der Antriebseinheit 13 der Schwenklenker 11 anfänglich bewegt wird, wird er aus seiner Riegelstellung (Fig. 1) in eine Entriegelstellung (Fig. 2) verschwenkt, in der er den Bolzen 16 des hinteren Dachteils 1 freigibt. Bei dieser anfänglichen Öffnungsbewegung des Schwenklenkers 11 zum Entriegeln des hinteren Dachteils 1 führt das Gelenk 20 des ersten Koppellenkers 19 ebenfalls eine Schwenkbewegung um das Schwenklager 12 des Schwenklenkers 11 aus. Andererseits wird der Koppellenker 19 in seinem Gelenk 21 durch den Winkelhebel 23 gehalten, der durch das Gewicht des hinteren Dachteils 1 in seiner Ausgangsstellung gemäß Fig. 1 vorbelastet ist. Die Länge des Koppellenkers 19 und seine Anordnung ist demnach derart abgestimmt, daß die Schwenkbewegung des Gelenks 20 zu keiner oder zu einer vernachlässigbaren Bewegung des Koppellenkers 19 an seinem Gelenk 21 führt. Folglich wird keine relevante Antriebsbewegung über die Verstellmechanik auf den ersten Lenker 4 und damit auf das hintere Dachteile 1 übertragen. Der erste Lenker 4 ist somit in einer Rast- oder Ruhestellung während der anfänglichen Antriebsbewegung bzw. Schwenkbewegung des Schwenklenkers 11.

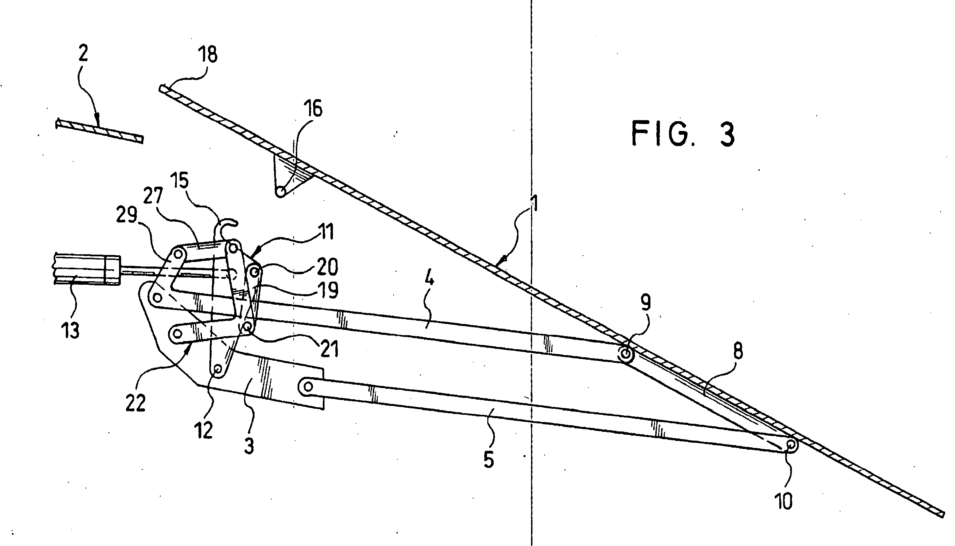

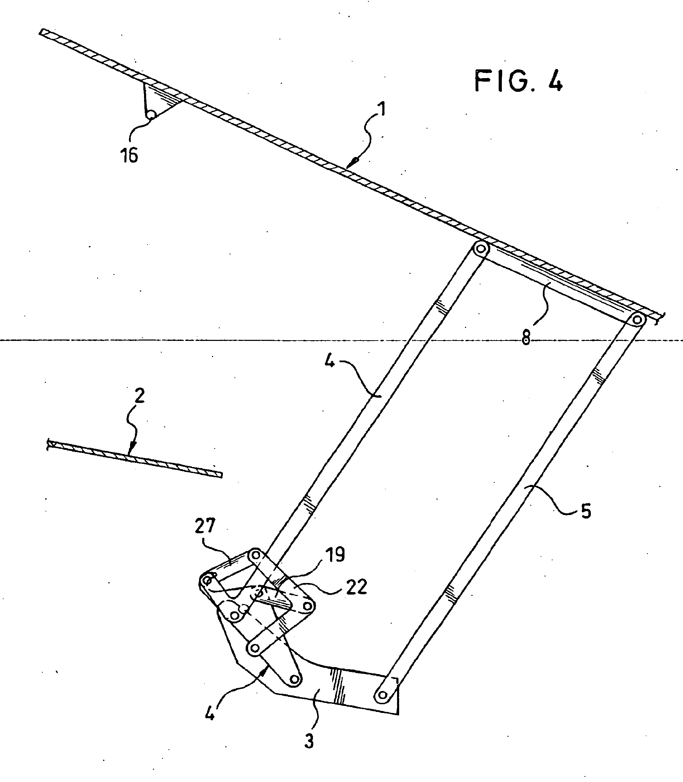

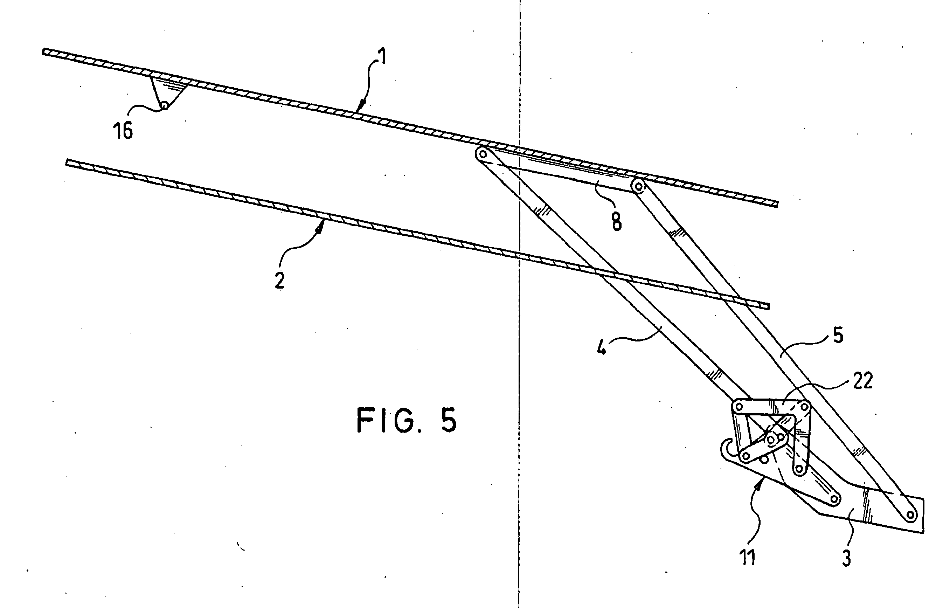

Beim weiteren Verschwenken des Schwenklenkers 11 durch die Antriebseinrichtung 13 (von Fig. 2 nach Fig. 3) zieht der erste Koppellenker 19 den Winkelhebel 23 in Öffnungsrichtung (im Gegenuhrzeigersinn gemäß den Fig. 2 und 3), da der Winkel zwischen der durch die beiden Gelenke 20 und 21 verlaufenden Längsachse des Koppellenkers 19 und der Verbindungsgeraden durch das Gelenk 12 des Schwenklenkers 11 und das obere Gelenk 20 des ersten Koppellenkers 19 größer wird. Die Schwenkbewegung des Winkelhebels 23 wird mit der Verstellkinematik in eine Schwenkbewegung des ersten Lenkers 4 und damit des das hintere Dachteil 1 lagernden Viergelenks übertragen. Das Viergelenk hebt den Oberrand 18 des hinteren Dachteils 1 an und verschwenkt es im weiteren Bewegungsablauf über das vordere Dachteil 2 (siehe Fig. 4) und bis in die vordere Öffnungsstellung im wesentlichen über dem vorderen Dachteil 2 (siehe Fig. 5). In dieser Anordnung kann das Fahrzeugdach z. B. entsprechend dem in der DE 101 50 219 A1 offenbarten Klappverdeck nach hinten in einen Ablageraum oder Verdeckkasten des Fahrzeugs abgelegt werden, wobei die Ablagebewegung des Daches schon vor Erreichen der vorderen Öffnungsstellung des hinteren Dachteils 1 beginnen kann.

Die Schließbewegung des Daches erfolgt in entgegengesetztem Bewegungsablauf. Wenn das hintere Dachteil 1 mittels der Verstellkinematik bzw. der Dachkinematik wieder in seine Schließstellung bewegt worden ist (Fig. 2), führt die letzte Antriebsbewegung zum Verschwenken des Schwenklenkers 11 in seine Riegelstellung, in der er das hintere Dachteil 1 gegenüber dem Lagerteil 3 verriegelt hält. Auf eine weitere Verriegelung zwischen dem hinteren Dachteil 1 und dem vorderen Dachteil 2 kann somit verzichtet werden.

Mit der beschriebenen Verstellkinematik kann ein Dachteil bewegt werden, das an einem Lagerteil des Daches oder auch unmittelbar an der Karosserie bewegbar gelagert und verriegelbar ist.

Das während der gesamten Bewegung des 6-gliedrigen Antriebsgetriebes ruhende vordere Dachteil 2, gegebenenfalls auch weitere an ihm angebrachte oder gelagerte Dachteile, kann über ein weiteres Getriebe mittels eines zusätzlichen Lenkers, der an einem der fünf beweglichen Lenker des Antriebsgetriebes, und zwar an einem der drei am Lagerteil 3 gelagerten Lenker (erster Lenker 4 bzw. dessen Anlenkfortsatz 29, Schwenklenker 11 oder Winkelhebel 22 mit seinen Schenkeln 23 oder 24) oder an einem der beiden Koppellenker 19 und 29 des Antriebsgetriebes angelenkt ist, durch die Antriebsbewegung ebenfalls ver- bzw. entriegelt werden, beispielsweise an einem Windlauf am Oberrand einer Windschutzscheibe des Fahrzeugs.

### Bezugszeichenliste

- 1: hinteres Dachteil
- 2: vorderes Dachteil
- 3: oberes Lagerteil
- 4: erster Lenker
- 5: zweiter Lenker
- 6: Gelenk
- 7: Gelenk
- 8: Lenker
- 9: Gelenk
- 10: Gelenk
- 11: Schwenklenker
- 12: Gelenk
- 13: Antriebseinrichtung
- 14: Anlenkpunkt
- 15: Haken
- 16: Bolzen
- 17: Haltelasche
- 18: Oberrand
- 19: erster Koppellenker
- 20: Gelenk
- 21: Gelenk
- 22: Winkelhebel
- 23: Schenkel
- 24: Schenkel
- 25: Gelenk
- 26: Gelenk
- 27: zweiter Koppellenker
- 28: Gelenk
- 29: Anlenkfortsatz

## Patentansprüche

1. Klappverdeck eines Fahrzeugs, das zwischen einer Schließstellung und einer Öffnungsstellung verstellbar ist, wobei ein bewegbar gelagertes Dachteil (1) des Klappverdecks mittels einer Verstellkinematik verstellbar ist und die Verstellkinematik als Rastgetriebe gebildet ist, das bei im wesentlichen ruhendem Dachteil (1) eine Zusatzfunktion ausführt,
**dadurch gekennzeichnet,**
**dass** die Verstellkinematik bzw. das Rastgetriebe einen an einem Lagerteil (3) schwenkbar gelagerten Schwenklenker (11), einen ersten Koppellenker (19) zwischen einem am Lagerteil (3) schwenkbar gelagerten Winkelhebel (22) und dem Schwenklenker (11), und einen zweiten Koppellenker (27) zwischen dem Winkelhebel (22) und einem Anlenkfortsatz (29) des einen Lenkers (4) der das Dachteil (1) lagernden Dachkinematik aufweist, und
**dass** eine Antriebseinrichtung (13) mit dem Schwenklenker (11) verbunden ist.

2. Klappverdeck nach Anspruch 1,
**dadurch gekennzeichnet, dass** die Verstellkinematik bzw. das Rastgetriebe als Zusatzfunktion eine Ver- bzw. Entriegelung des Dachteils (1) ausführt.

3. Klappverdeck nach Anspruch 1 oder 2,
**dadurch gekennzeichnet, dass** die Verstellkinematik bzw. das Rastgetriebe ein 6-gliedriges Getriebe enthält bzw. ist.

4. Klappverdeck nach einem der Ansprüche 1 bis 3,
**dadurch gekennzeichnet, dass** der Schwenklenker (11) ein Riegelorgan (15) als Teil einer Riegeleinrichtung für das Dachteil (1) aufweist.

5. Klappverdeck nach Anspruch 4,
**dadurch gekennzeichnet, dass** die Riegeleinrichtung ein Riegelgegenstück, insbesondere einen Verriegelungsbolzen (16), am Dachteil (1) aufweist.

6. Klappverdeck nach einem der Ansprüche 1 bis 5,
**dadurch gekennzeichnet, dass** das Lagerteil (3) ein karosseriefestes Teil oder ein Teil des Klappverdecks oder seiner Lagerung ist.

7. Klappverdeck nach einem der Ansprüche 1 bis 6,
**dadurch gekennzeichnet, dass** zumindest ein weiterer Betätigungsmechanismus für eine weitere Funktion an die Verstellmechanik bzw. das Rastgetriebe gekoppelt ist.

8. Klappverdeck nach Anspruch 7,
**dadurch gekennzeichnet, dass** der weitere Betätigungsmechanismus an einem am Lagerteil (3) gelagerten Lenker (4, 11, 22) oder an einem Koppellenker (19, 27) angelenkt ist.

## Claims

1. Collapsible top of a vehicle, which collapsible top can be adjusted between a closed position and an open position, with it being possible for a movably mounted roof part (1) of the collapsible top to be adjusted by means of a kinematic adjusting mechanism and with the kinematic adjusting mechanism being formed as a latching mechanism which performs an additional function when the roof part (1) is substantially stationary,
**characterized**
**in that** the kinematic adjusting mechanism or the latching mechanism has a pivoting strut (11) which is pivotably mounted on a mounting part (3), a first coupling strut (19) between an angle lever (22), which is pivotably mounted on the mounting part (3), and the pivoting strut (11), and a second coupling strut (27) between the angle lever (22) and a connecting projection (29) of the one strut (4) of the roof kinematic mechanism which serves to mount the roof part (1), and in that a drive device (13) is connected to the pivoting strut (11).

2. Collapsible top according to Claim 1,
**characterized in that** the kinematic adjusting mechanism or the latching mechanism performs, as an additional function, locking and unlocking of the roof part (1).

3. Collapsible top according to Claim 1 or 2,
**characterized in that** the adjusting kinematic mechanism or the latching mechanism comprises or is a 6-link mechanism.

4. Collapsible top according to one of Claims 1 to 3,
**characterized in that** the pivoting strut (11) has a locking element (15) as part of a locking device for the roof part (1).

5. Collapsible top according to Claim 4,
**characterized in that** the locking device has a locking counterpart, in particular a lock bolt (16), on the roof part (1).

6. Collapsible top according to one of Claims 1 to 5,
**characterized in that** the mounting part (3) is a part which is fixed to the body, or is a part of the collapsible top or of its mounting arrangement.

7. Collapsible top according to one of Claims 1 to 6,
**characterized in that** at least one further actuating mechanism for a further function is coupled to the adjusting mechanism or to the latching mechanism.

8. Collapsible top according to Claim 7,
**characterized in that** the further actuating mechanism is articulatedly connected to a strut (4, 11, 22) which is mounted on the mounting part (3), or to a coupling strut (19, 27).

## Revendications

1. Capote escamotable d'un véhicule, qui peut être déplacée entre une position de fermeture et une position d'ouverture, une partie de toit (1) de la capote escamotable, montée mobile, pouvant être déplacée au moyen d'une cinématique de mouvement et la cinématique de mouvement étant réalisée sous forme de transmission à encliquetage, qui effectue une fonction supplémentaire lorsque la partie de toit (1) est essentiellement au repos,
**caractérisée en ce que**
la cinématique de mouvement ou la transmission à encliquetage présente un bras pivotant (11) monté de manière à pouvoir pivoter sur une partie de palier (3), un premier bras d'accouplement (19) entre un levier coudé (22) monté de manière à pouvoir pivoter sur une partie de palier (3) et le bras pivotant (11), et un deuxième bras d'accouplement (27) entre le levier coudé (22) et une saillie d'articulation (29) de l'un des bras (4) de la cinématique du toit supportant la partie de toit (1), et **en ce qu'**un dispositif d'entraînement (13) est connecté au bras pivotant (11).

2. Capote escamotable selon la revendication 1,
**caractérisée en ce que**
la cinématique de mouvement ou la transmission à encliquetage effectue, en tant que fonction supplémentaire, un verrouillage ou un déverrouillage de la partie de toit (1).

3. Capote escamotable selon la revendication 1 ou 2,
**caractérisée en ce que** la cinématique de mouvement ou la transmission à encliquetage comprend ou est une transmission à 6 membres.

4. Capote escamotable selon l'une quelconque des revendications 1 à 3, **caractérisée en ce que** le bras pivotant (11) présente un organe de verrouillage (15) faisant partie d'un système de verrouillage pour la partie de toit (1).

5. Capote escamotable selon la revendication 4,
**caractérisée en ce que** le système de verrouillage présente une pièce de verrouillage conjuguée, notamment un boulon de verrouillage (16), sur la partie de toit (1).

6. Capote escamotable selon l'une quelconque des revendications 1 à 5,
**caractérisée en ce que** la partie de palier (3) est une partie fixée à la carrosserie ou une partie de la capote escamotable ou de son support de palier.

7. Capote escamotable selon l'une quelconque des revendications 1 à 6,
**caractérisée en ce qu'**au moins un mécanisme d'actionnement supplémentaire pour une autre fonction est accouplé au mécanisme de mouvement ou à la transmission à encliquetage.

8. Capote escamotable selon la revendication 7,
**caractérisée en ce que** le mécanisme d'actionnement supplémentaire est articulé à un bras (4, 11, 22) monté sur la partie de palier (3) ou à un bras d'accouplement (19, 27).
